(19) **Europäisches Patentamt**

**European Patent Office**

**Office européen des brevets**

(11) **EP 0 849 660 B1**

(12) **FASCICULE DE BREVET EUROPEEN**

(45) Date de publication et mention
de la délivrance du brevet:
**27.10.2004 Bulletin 2004/44**

(51) Int Cl.⁷: **G06F 1/30**

(21) Numéro de dépôt: **97203844.2**

(22) Date de dépôt: **08.12.1997**

(54) **Appareil électronique portable doté d'un dispositif pour détecter une variation de la tension d'alimentation**

Tragbares elektronisches Gerät mit Detektorvorrichtung der Änderungen einer Versorgungsspannung

Portable electronic apparatus with a device for detecting a variation in the supply voltage

(84) Etats contractants désignés:
**DE FR GB**

(30) Priorité: **19.12.1996 FR 9615665**

(43) Date de publication de la demande:
**24.06.1998 Bulletin 1998/26**

(73) Titulaire: **Koninklijke Philips Electronics N.V.**
**5621 BA Eindhoven (NL)**

(72) Inventeur: **Charron, Didier**
**75008 Paris (FR)**

(74) Mandataire: **Chaffraix, Jean**
**Société Civile SPID,**
**156, Boulevard Haussmann**
**75008 Paris (FR)**

(56) Documents cités:
**EP-A- 0 404 061      EP-A- 0 759 671**
**GB-A- 2 270 445      US-A- 4 509 201**

- **PATENT ABSTRACTS OF JAPAN vol. 015, no. 348 (E-1107), 4 septembre 1991 & JP 03 135145 A (TOSHIBA CORP), 10 juin 1991,**
- **PATENT ABSTRACTS OF JAPAN vol. 096, no. 007, 31 juillet 1996 & JP 08 079339 A (FUNAI ELECTRIC CO LTD)**
- **PATENT ABSTRACTS OF JAPAN vol. 096, no. 006, 28 juin 1996 & JP 08 033225 A (TOSHIBA BATTERY CO LTD), 2 février 1996,**
- **PATENT ABSTRACTS OF JAPAN vol. 018, no. 595 (E-1630), 14 novembre 1994 & JP 06 225470 A (MATSUSHITA ELECTRIC IND CO LTD), 12 août 1994,**

**Description**

L'invention concerne un appareil électronique destiné à être alimenté à partir d'une tension d'alimentation comportant un dispositif de détection de tension d'alimentation pour fournir des signaux d'interruption représentatifs du franchissement de seuils de tension par la tension d'alimentation, et un organe de contrôle muni d'au moins une entrée d'interruption, lesdits signaux d'interruption étant appliqués à ladite entrée d'interruption pour générer respectivement une interruption de l'organe de contrôle et déclencher un programme d'interruption répondant auxdits signaux.

Dans les pays fortement industrialisés, une tendance actuelle vise à miniaturiser les dimensions des équipements de télécommunication portables destinés à un large public et à une utilisation courante. Les constructeurs de ces matériels électroniques s'exposent donc à une concurrence sévère en ce qui concerne le ratio poids volume sur autonomie de leurs appareils. Les dernières technologies de circuits intégrés permettant aujourd'hui de réduire considérablement le volume des circuits électroniques, l'autonomie de ces équipements portables est devenu le facteur limitant cette course à la miniaturisation. En effet, généralement destinés à une utilisation mobile, ces appareils sont alimentés par des batteries d'alimentation dont l'autonomie est proportionnelle au poids dans une technologie donnée. Par conséquent, un appareil alimenté par une batterie est d'autant plus léger que son autonomie est faible, ce qui explique pourquoi la batterie des appareils portatifs se trouve fréquemment déchargée.

Il est donc très important d'anticiper pendant la décharge le moment où la tension d'alimentation va être coupée pour prévenir certains phénomènes susceptibles d'endommager l'appareil. Notamment, les radiotéléphones mobiles ou autres équipements dotés de processeurs et de mémoires effaçables électriquement du type EEPROM (Electrically Erasable Programmable Read Only Memory) ne supportent pas les coupures brusques de courant. Si l'alimentation en courant n'est pas coupée avant que sa tension ne passe en dessous d'un seuil défini comme critique par le constructeur, le contenu des EEPROM peut être corrompu. En effet, le processeur alimenté par une tension insuffisante ne contrôle plus son système d'adressage. Il risque d'écrire en EEPROM à une adresse erronée et d'écraser les données qui se trouvent à cette adresse. Des informations peuvent alors d'être perdues ce qui est très préjudiciable pour l'utilisation du radiotéléphone.

Dans un appareil électronique connu, on utilise un dispositif de détection de tension d'alimentation pour sonder périodiquement la tension d'alimentation délivrée par la batterie afin de détecter l'instant où ladite tension passe au dessous du seuil critique et couper l'alimentation pour ne pas altérer les données de l'EEPROM.

Un appareil muni d'un tel dispositif de détection de tension d'alimentation présente cependant un inconvénient majeur mettant en cause sa fiabilité. En effet, basé sur une technique de sondage périodique, la précision de détection et donc la fiabilité de ce dispositif dépendent directement de la période de sondage utilisée. Comme la courbe classique de décharge d'une batterie plonge très rapidement à la fin de la décharge, il se produit fréquemment une coupure d'alimentation non détectée par le dispositif actuel dont la période de sondage est trop grande par rapport à la rapidité de baisse de tension en fin de décharge.

Diminuer la période de sondage pour augmenter les chances de détecter le franchissement du seuil critique constitue une solution trop onéreuse qui nécessite un processeur plus rapide et plus puissant que celui utilisé dans le dispositif connu.

Le brevet américain US 4,509,201 décrit un radiotéléphone alimenté par une tension d'alimentation. Le radiotéléphone comprend un circuit de détection de tension d'alimentation comprenant un premier comparateur apte à détecter une chute de la tension d'alimentation sous un premier seuil de tension. La sortie du premier comparateur est connectée à une unité centrale de contrôle. Lorsque la tension d'alimentation chute sous le premier seuil de tension, l'unité centrale de contrôle effectue une sauvegarde des informations nécessaires à la restauration d'une communication dans des registres de sauvegarde. Le circuit de détection de tension d'alimentation comprend également un second comparateur apte à détecter une chute de la tension d'alimentation sous un second seuil de tension. La sortie du second comparateur est connectée à un circuit de contrôle de l'alimentation. Lorsque la tension d'alimentation chute sous le second seuil de tension, le circuit de contrôle de l'alimentation coupe l'alimentation de l'unité centrale de contrôle.

L'abrégé de la demande de brevet japonaise JP 03135145 décrit un circuit de détection de tension d'alimentation apte à détecter une chute de la tension d'alimentation sous un seuil prédéterminé de tension. Lorsque la tension d'alimentation chute sous ledit seuil de tension, une unité centrale de contrôle effectue une sauvegarde des données contenues dans une mémoire volatile dans une mémoire non-volatile.

La demande de brevet européen EP 0 404 061 décrit un ordinateur alimenté par une source de tension interne de type batterie. L'ordinateur comprend un circuit de détection de tension d'alimentation apte à détecter une chute de la tension d'alimentation sous un seuil prédéterminé de tension et une unité centrale de contrôle. Lorsque la tension d'alimentation de la source de tension interne devient inférieure ou égale au seuil prédéterminé de tension, les données en cours de traitement par l'ordinateur sont sauvegardées.

L'abrégé de la demande de brevet japonaise JP 08033225 décrit un circuit de charge d'une batterie destinée à limiter la surcharge de la batterie lorsque celle ci est déjà complètement rechargée.

La présente invention décrit une solution simple et économique pour remédier dans une large mesure à ces inconvénients. Elle a notamment pour but de fournir un dispositif de détection de la tension d'alimentation plus fiable que le dispositif connu, sans augmenter notablement la complexité des circuits électroniques mis en oeuvre. Le dispositif selon l'invention est en outre capable de détecter instantanément le franchissement d'un seuil de tension défini comme critique pour couper l'alimentation de l'appareil afin de ne pas altérer les données numériques stockées en mémoire EEPROM.

Pour cela, l'appareil électronique du genre mentionné dans le préambule est remarquable en ce qu'il comporte une mémoire contenant des valeurs de consigne correspondant aux seuils de tensions, lesdites valeurs étant effaçables électriquement, et en ce que l'organe de contrôle est apte à transmettre au dispositif de détection de tension d'alimentation une valeur de consigne correspondant à un second seuil de tension lorsque qu'un signal d'interruption correspondant au franchissement d'un premier seuil de tension est fourni audit organe.

Le dispositif détection de tension d'alimentation se comporte ainsi comme un dispositif de surveillance continue de la tension d'alimentation et présente l'avantage de ne pas mettre en oeuvre le processeur jusqu'à ce que la tension d'alimentation franchisse un seuil fixé. Ledit processeur est donc plus disponible pour effectuer d'autres opérations, notamment pour gérer la communication entre la station mobile et la station de base dans le cas d'un radiotéléphone.

Une première caractéristique de l'invention selon laquelle un appareil électronique du genre mentionné ci-dessus comporte un dispositif de détection de la tension d'alimentation, remarquable en ce que le dispositif de surveillance continue fournit un deuxième signal pour indiquer un niveau de tension d'alimentation, apporte l'avantage de permettre à l'utilisateur de contrôler le niveau de charge de sa batterie pour anticiper le moment où il devra la recharger.

Une deuxième caractéristique de l'invention selon laquelle le dispositif de détection de la tension d'alimentation est remarquable en ce que le dispositif de surveillance continue fournit un troisième signal pour indiquer une surcharge, apporte l'avantage supplémentaire de prévenir l'explosion de la batterie par une coupure de l'alimentation à l'apparition du troisième signal.

Selon encore une autre caractéristique de l'invention, il est prévu un appareil électronique du genre déjà mentionné

remarquable en ce que le dispositif de surveillance continue comporte, de plus, un dispositif de comparaison pour comparer la valeur de la tension d'alimentation à des valeurs de consigne et fournir respectivement lesdits signaux. Cette caractéristique fournit un moyen pour définir des seuils de détection en fonction du type de batterie utilisé d'une part et des besoins de l'utilisateur d'autre part.

La description suivante, faite en regard des dessins ci-annexés, le tout donné à titre d'exemple non limitatif fera bien comprendre comment l'invention peut être réalisée.

La figure 1 représente un exemple d'appareil électronique selon l'invention.
La figure 2 illustre une courbe de décharge classique d'une batterie d'alimentation représentant la tension d'alimentation en fonction du temps.
La figure 3 montre un schéma synoptique d'un circuit de l'appareil représenté à la figure 1.
La figure 4 illustre un mode de réalisation préféré du dispositif selon l'invention.
La figure 5 représente la table 32a de l'EEPROM 32 indiquée à la figure 3.
La figure 6 représente :

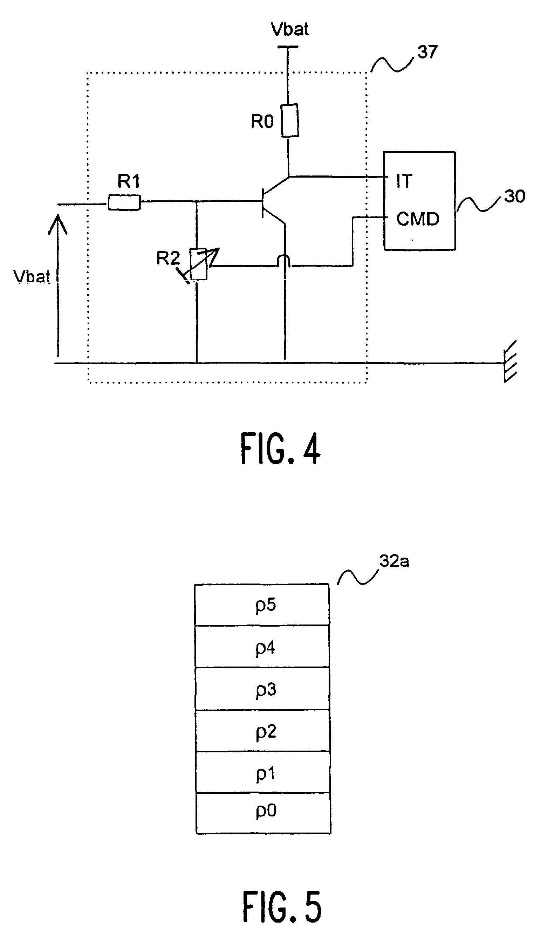

- en A, un chronogramme illustrant les états logiques de trois ports de l'élément R2 représenté à la figure 5, pour augmenter la valeur de la résistance de R2,
- en B, un chronogramme illustrant les états logiques de ces trois ports, pour diminuer la valeur de la résistance de R2.

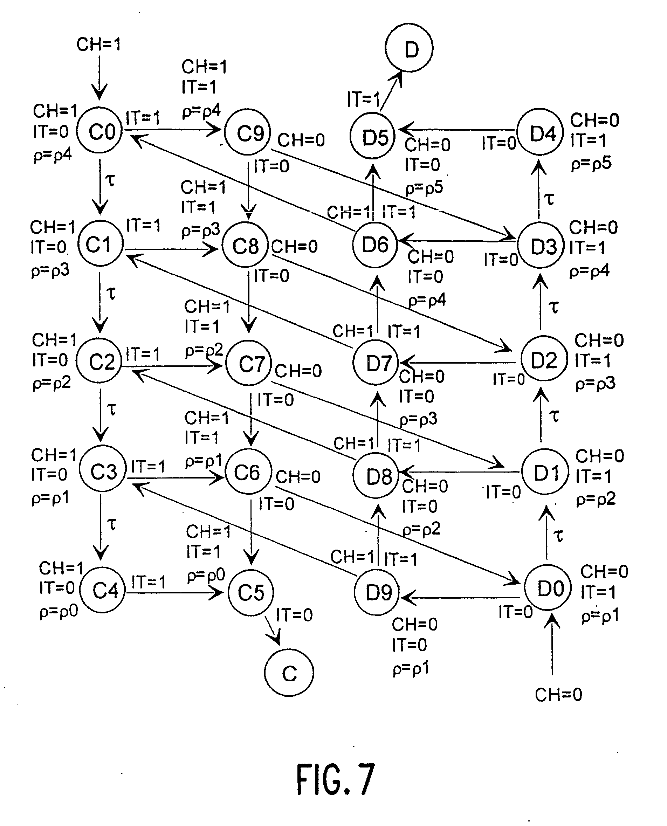

La figure 7 représente un automate illustrant le fonctionnement du dispositif représenté à la figure 4.

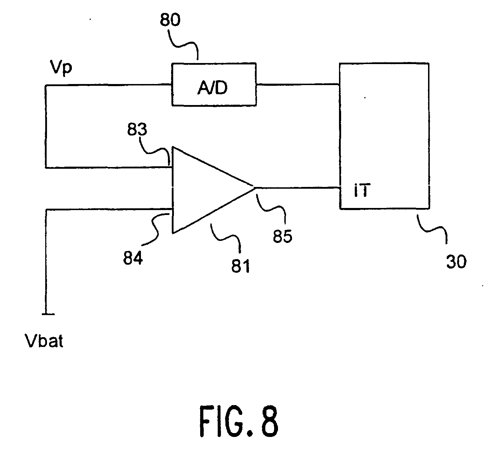

La figure 8 illustre un autre mode de réalisation du dispositif selon l'invention.

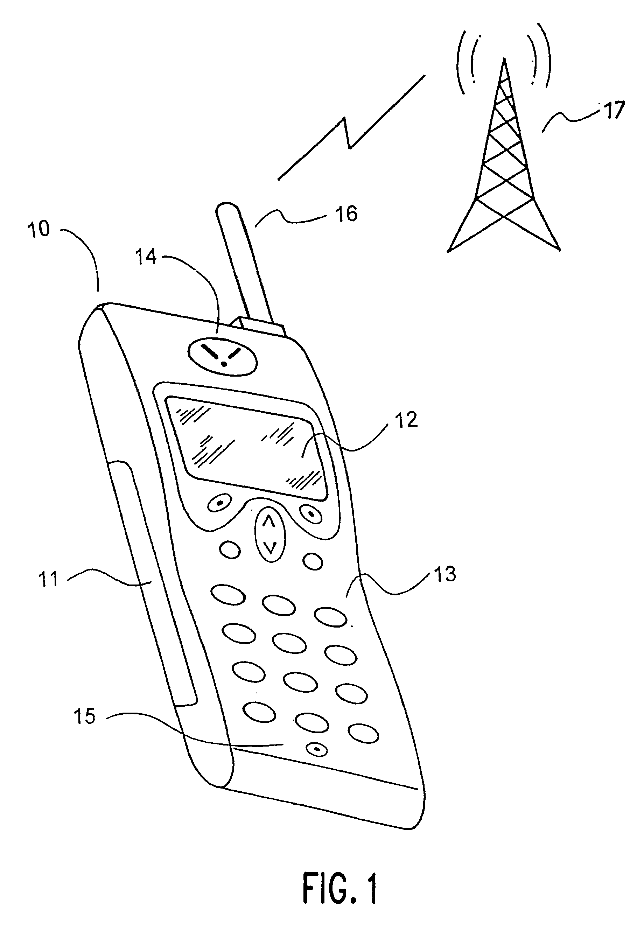

L'appareil électronique représenté à la figure 1 est un radiotéléphone, mais le dispositif de détection de tension d'alimentation peut être appliqué à tout autre appareil électronique alimenté à partir d'une tension d'alimentation.

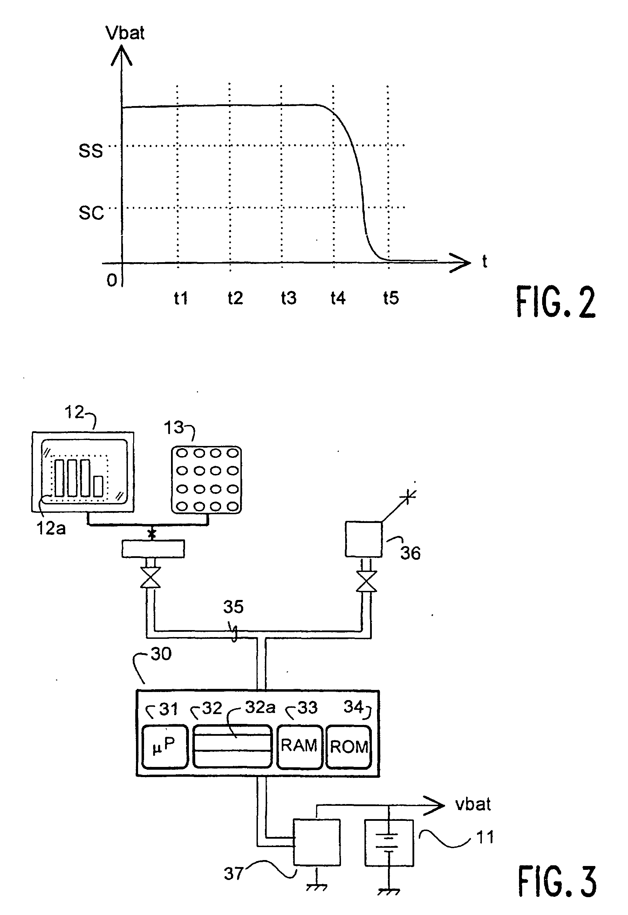

Le radiotéléphone représenté à la figure 1 comporte un boitier 10 renfermant une batterie d'alimentation 11 et des circuits électroniques dont celui représenté à la figure 3, un écran 12, un clavier 13, un haut-parleur 14, un microphone 15 et un dispositif d'émission/réception (non représenté) coopérant avec une antenne 16 pour échanger des signaux radioélectriques avec un site de base 17.

La courbe de décharge de la batterie (Vbat) en fonction du temps (t) représentée à la figure 2, met en évidence l'accélération de la baisse de tension à la fin de la décharge. Les instants notés t1, t2, t3, t4 et t5 représentent des exemples d'échantillons relevés par le dispositif de sondage périodique connu de l'art antérieur pour mesurer la tension d'alimentation Vbat.

SS représente le seuil critique dont la détection par le dispositif de l'art antérieur signale une chute de tension vbat suffisamment importante pour interdire toute écriture en mémoire EEPROM, les risques d'erreurs d'adressage devenant trop importants. SC représente le seuil de coupure d'alimentation dont le franchissement par la tension d'alimentation provoque une coupure d'alimentation. Il est donc indispensable de détecter le seuil SS avant que la tension d'alimentation ne franchisse le seuil SC.

Pourtant, entre les échantillons t4 et t5, la courbe de tension d'alimentation franchit le seuil de coupure d'alimentation SC sans que le dispositif de détection ne détecte le franchissement du seuil SS puisque les seuils SS et SC sont franchis entre deux prises d'échantillons successives. Cet exemple illustre bien le manque de fiabilité du dispositif connu.

Le schéma synoptique de la figure 3 représente les différents éléments mis en oeuvre dans le dispositif selon l'invention. L'organe de commande 30 est composé d'un processeur 31, d'une mémoire morte programmable électriquement effaçable 32 de type EEPROM, d'une mémoire vive à accès aléatoire 33 de type RAM (Random Access Memory) et d'une mémoire morte 34 de type ROM (Read Only Memory).

Le programme principal de fonctionnement de l'appareil est stocké en mémoire morte 34. La mémoire vive 33 est utilisée en parallèle avec la mémoire morte 34, pour positionner les variables utiles. Les données effaçables sont stockées en EEPROM 32 pour être modifiées en cours d'utilisation de l'appareil. Les valeurs de consigne correspondant aux seuils de tension à détecter sont rangées dans une table 32a de la mémoire 32 pour être accessibles à l'organe de contrôle 30.

Un réseau de bus 35 contient un bus d'interruptions pour transmettre les signaux du clavier 13 vers le processeur 31 et un bus série du type IIC (Inter Integrated Circuit) destiné aux signaux transitant entre le processeur 31, l'EEPROM 32 et l'écran 12. Un dispositif d'émission/réception 36 communique avec les dispositifs précédemment décrits pour relier l'utilisateur du radiotéléphone au réseau de téléphone mobile.

Un circuit de détection d'alimentation 37 coopère avec l'organe de contrôle 30 et la batterie d'alimentation 11, pour mettre en oeuvre le dispositif de détection de tension d'alimentation selon l'invention.

Un mode de réalisation préféré du dispositif 37 est représenté à la figure 4 sous la forme d'un circuit électronique. La batterie d'alimentation 11 fournit une tension d'alimentation Vbat dont la valeur est par exemple comprise entre 3 et 5,5Volts et qui varie en fonction de la charge/décharge de la batterie. R0 et R1 représentent des éléments résistifs dont les résistances respectives sont fixes. R2 est un élément résistif dont la résistance est variable et est destinée à être programmée par l'organe de contrôle 30 en fonction de la valeur de la tension Vbat et du seuil de tension que l'on veut détecter. Un tel élément R2 dont la résistance est programmable numériquement est disponible dans le commerce. On pourra par exemple utiliser un potentiomètre DS1804 NV de Dallas Semiconductor.

Selon le mode de réalisation préféré de l'invention, R2 est commandé par l'organe 30 dont une sortie CMD lui est directement connectée pour régler en temps réel la valeur de sa résistance en fonction notamment de la tension d'alimentation Vbat intervenant dans la formule du pont diviseur de tension liant R1 et R2 par l'équation : $VR2 = Vbat \times R2 / (R1 + R2)$.

Un transistor T monté en mode interrupteur est susceptible de générer une interruption IT de l'organe de contrôle 30 en fonction notamment de la tension appliquée à sa base, égale à VR2, pour déclencher l'exécution d'un programme d'interruption. L'association des éléments résistifs R1 et R2 avec le transistor T réalise le test continu de la condition de conduction du transistor T mis en oeuvre dans le dispositif de surveillance continue de la tension d'alimentation.

Selon un avantage de l'invention, ce test se produit naturellement et de façon continue sans intervention de l'organe de contrôle 30. Il utilise un phénomène électronique lié à la différence de potentiel Vbe entre la base et l'émetteur du transistor T, aussi appelée seuil de conduction dudit transistor. Lorsque le potentiel de la base du transistor (VR2) est supérieur au seuil de conduction Vbe (en général Vbe=0,6 Volts), le transistor T conduit selon la condition de conduction du transistor T. Lorsque ce potentiel est inférieur à Vbe, le transistor est bloqué selon la condition inverse de blocage.

Ces conditions se vérifient concrètement sur la figure 4. Tant que VR2 < Vbe, le transistor T est bloqué et la tension au collecteur est égale à Vbat. La valeur de R2 fixée par l'organe 30 restant constante, une augmentation de la tension d'alimentation Vbat, provoque l'augmentation de la valeur de la tension VR2. Lorsque VR2 > Vbe le transistor T conduit, la tension au collecteur devient quasiment nulle.

On a arbitrairement programmé le dispositif pour que pendant la charge de la batterie, une tension nulle au collecteur (T conduit) déclenche une interruption de l'organe de contrôle 30 et que pendant la décharge, une interruption soit déclenchée lorsque la tension au collecteur est voisine de Vbat (T bloqué). Le port d'interruption de l'organe de contrôle 30 est donc normalement actif sur le niveau logique haut pendant la décharge de la batterie et sur le niveau bas pendant la charge.

Ainsi, selon le circuit 37, la valeur de la tension VR2 aux bornes de R2 détermine les seuils d'interruption de l'organe de contrôle 30 représentant les seuils de détection de la tension d'alimentation Vbat. Le principe de l'invention consiste donc à fixer la valeur de la résistance de R2 en fonction du seuil de tension d'alimentation que l'on souhaite détecter. Pour cela, l'organe 30 utilise sa sortie de commande CMD.

Dans l'exemple de la table 32a représenté à la figure 5, la résistance de l'élément R2 ne pourra prendre que les valeurs de consigne ρ0 à ρ5, selon un ordre logique en fonction des seuils précédemment détectés, c'est-à-dire dans un ordre de valeurs décroissantes durant la charge et croissantes durant la décharge. La plus grande valeur de la table 32a pouvant être donnée à la résistance de R2 correspond au seuil de surcharge (détecté à l'aide de la valeur ρ0) et la plus basse au seuil de coupure d'alimentation (détecté à l'aide de la valeur ρ5). La table 32a contient autant de valeurs de consigne qu'il y a de seuils à détecter pour générer respectivement une interruption de l'organe de contrôle 30 et déclencher un programme d'interruption.

Le tableau suivant donne des exemples de valeurs numériques correspondant aux valeurs de consigne ρ0 à ρ5 selon le mode de réalisation préféré de l'invention. Les valeurs numériques ont été obtenues en prenant pour R2 un potentiomètre à 100 pas d'ajustement DS1804 NV de Dallas Semiconductor et pour R1 une résistance de 400 Kohm. La tension Vbat et la résistance de R2 sont indiquées respectivement en Volts et Kohm. Le nombre de pas du potentiomètre est un nombre sans unité compris entre 0 et 100 selon la spécification du fabriquant.

| Vbat | 5,5 | 5 | 4,5 | 4 | 3,5 | 3 |
|---|---|---|---|---|---|---|
| R2 | 48,98 | 54,54 | 61,54 | 70,59 | 82,76 | 100 |
| Pas | 43 | 49 | 57 | 67 | 80 | 100 |
| Consigne | ρ0 | ρ1 | ρ2 | ρ3 | ρ4 | ρ5 |

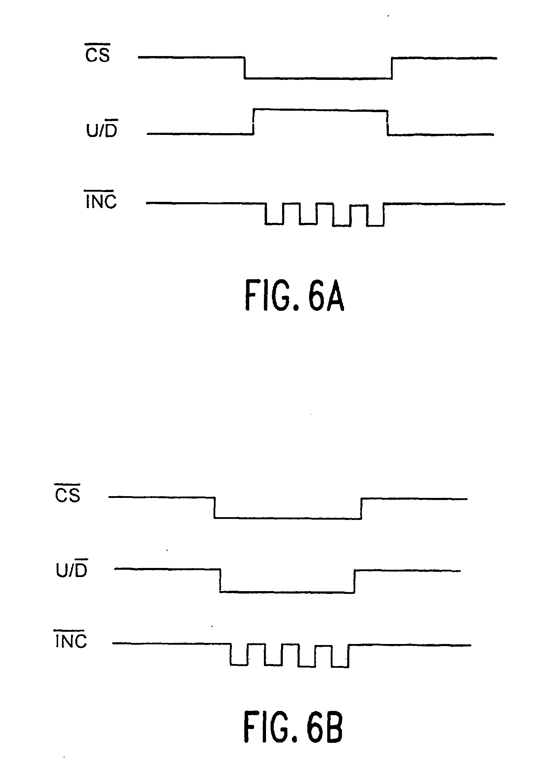

La programmation de R2 se fait par bus spécifiques, reliant la sortie CMD de l'organe de contrôle 30 constituée de trois ports de sortie, à trois ports d'entrées de R2 notés respectivement $\overline{INC}$, U/$\overline{D}$ et $\overline{CS}$ en référence à la figure 6. En A, un chronogramme illustre en fonction du temps, les états des trois ports précédemment cités pour augmenter de quatre pas la valeur de la résistance de R2 et en B sont illustrés les états de ces ports pour diminuer ladite valeur de quatre pas. $\overline{CS}$ est positionné au niveau logique bas pour modifier la valeur de la résistance de R2. Pour augmenter cette valeur, U/$\overline{D}$ est sur le niveau haut et pour la diminuer U/$\overline{D}$ est sur le niveau bas. $\overline{INC}$ actif sur le niveau bas sert à augmenter ou diminuer pas à pas la valeur de la résistance de R2.

Une interruption IT de l'organe de contrôle 30 est générée pendant la charge et la décharge de la batterie, à la détection de chaque seuil de tension correspondant à une valeur de consigne. Selon la valeur de consigne détectée, un programme d'interruption coupe l'alimentation (détection à ρ5), arrête la charge (détection à ρ0) ou indique un niveau de tension d'alimentation (détection à ρ1, ρ2, ρ3 ou ρ4).

Tout dispositif permettant de transmettre un message spécifique à l'utilisateur peut être utilisé selon l'invention pour indiquer le niveau de tension d'alimentation. Par exemple, si l'appareil est doté d'un écran de contrôle comme dans l'exemple représenté à la figure 3, le niveau de tension d'alimentation peut être indiqué par un dispositif d'affichage permettant d'afficher à l'écran 12 une icône 12a ou un message particulier symbolisant le niveau de charge/décharge de la batterie 11. L'icône 12a persistant à l'écran, représente des barres susceptibles d'apparaître ou disparaître de l'écran 12 au fur et à mesure de la détection des seuils de tension d'alimentation pendant la charge et la décharge de la batterie. Si l'appareil est doté d'un haut-parleur 14, comme dans l'exemple représenté à la figure 1, un dispositif émettant un signal sonore peut également être utilisé pour indiquer le niveau de charge de la batterie.

Le fonctionnement du dispositif de détection de tension d'alimentation représenté à la figure 4 va maintenant être décrit en référence à la figure 7.

L'automate comporte vingt états stables représentatifs des différents états du dispositif selon l'invention, déterminés par deux variables binaires (CH, IT) et une variable (ρ) pouvant prendre les 6 valeurs de consigne.

A chaque mise sous tension de l'appareil, celui-ci étant sur son chargeur, le programme principal positionne la variable CH=1 et active l'interruption IT exceptionnellement sur niveau haut (IT étant normalement active sur niveau bas pendant la charge) afin de tester le niveau de charge de la batterie et d'affecter à la résistance de R2, la valeur de consigne adéquate pour démarrer ou poursuivre la charge selon que la batterie est complètement déchargée ou déjà partiellement chargée.

Pour cela, l'organe de contrôle 30 balaye les valeurs de la table 32a dans le sens décroissant jusqu'à provoquer une interruption, (exceptionnellement active sur niveau haut). Le dispositif décrit ainsi les états C0 à C4 (caractérisés par une valeur de consigne ρ4 à ρ0), passant d'un état à un autre à l'expiration d'une temporisation τ suffisante pour détecter l'apparition éventuelle d'une interruption (IT=1) plaçant le dispositif dans l'un des états C5 à C9. Le programme d'interruption mémorise alors la valeur de consigne ρ0 à ρ4 détectée pour afficher le niveau de charge de la batterie. L'interruption est reprogrammée sur niveau bas. Puis, à chaque nouvelle interruption (IT=0) pendant la charge (CH=1), le dispositif décrit les états suivants selon l'ordre indiqué par les flèches. Le programme d'interruption met à jour le niveau de tension d'alimentation et diminue la valeur de consigne lors du passage de l'un des états C6 à C9 à l'un des états C5 à C8 ou désactive le chargeur pour arrêter la charge lors du passage de l'état C5 à C.

A chaque mise sous tension de l'appareil, celui-ci étant hors de son chargeur, le programme principal positionne la variable CH=0 et active l'interruption IT exceptionnellement sur niveau bas (IT étant normalement active sur niveau haut pendant la décharge) afin de tester le niveau de décharge de la batterie et d'affecter la valeur de consigne appropriée à la résistance de R2.

Pour cela, il balaye les valeurs de consigne de la table 32a dans le sens croissant jusqu'à provoquer une interruption, (exceptionnellement active sur niveau bas). Le dispositif décrit ainsi les états D0 à D4 (caractérisés par une valeur de consigne $\rho1$ à $\rho5$) jusqu'à ce qu'une interruption (IT=0) le place dans l'un des états D5 à D9. Le programme d'interruption mémorise alors la valeur de consigne $\rho1$ à $\rho5$ détectée pour afficher le niveau de charge de la batterie. L'interruption est reprogrammée sur niveau haut. Puis, à chaque nouvelle interruption (IT=1) pendant la décharge (CH=0), le dispositif décrit les états suivants selon l'ordre indiqué par les flèches. Le programme d'interruption met à jour le niveau de tension d'alimentation et augmente la valeur de consigne lors du passage de l'un des états D6 à D9 à l'un des états D5 à D8 ou coupe l'alimentation lors du passage de l'état D5 à l'état D.

Selon un avantage de l'invention, il est également possible de commuter du mode décharge (CH=0) au mode charge (CH=1) et inversement sans effectuer tout le processus de début de charge ou de décharge destiné à affecter à la résistance de R2 la bonne valeur de consigne. Il suffit de positionner la variable CH=0 pour passer au mode décharge depuis les états de charge C6 à C9 ou de positionner la variable CH=1 pour passer au mode charge depuis les états de décharge D6 à D9. L'élément résistif R2 conserve sa valeur de consigne $\rho1$ à $\rho4$, le niveau de charge de la batterie est mémorisé et l'interruption IT est reprogrammée sur le niveau logique adéquat (bas exceptionnellement pour commuter au mode décharge, haut exceptionnellement pour commuter au mode charge).

Un autre mode de réalisation de l'invention est représenté à la figure 8 sous la forme d'un circuit électronique simplifié. Il comporte l'organe de contrôle 30, un convertisseur Numérique/Analogique 80 et un comparateur 81.

L'organe de contrôle 30 calcule et stocke dans la table 32a, les valeurs de consigne correspondant aux seuils de tension que l'on souhaite détecter. Il les transmet respectivement par sa sortie 82 au convertisseur Numérique/Analogique 80 pour les convertir en seuils de tensions à détecter Vp, compréhensibles par les autres composants analogiques du circuit. Comme dans le dispositif décrit en référence à la figure 4, l'organe 30 fixe les tensions Vp dans un ordre logique pour suivre la charge/décharge de la batterie. Le comparateur 81 compare les tensions Vp et la tension d'alimentation Vbat appliquées respectivement à ses entrées 83 et 84 pour générer une interruption IT de l'organe de contrôle 30 en fonction du résultat 85 de la comparaison. Si Vp = Vbat, une interruption IT est générée pour fournir le signal indiquant que la tension d'alimentation Vbat franchit un seuil de détection.

Ainsi, on a décrit un appareil électronique comportant un dispositif de détection de tension d'alimentation simple et économique capable de détecter instantanément le franchissement d'un seuil de tension d'alimentation pour couper l'alimentation sans altérer de données numériques, indiquer à tout moment le niveau de charge de la batterie d'alimentation et arrêter la charge en cas de surcharge.

Bien entendu, l'invention n'est pas limitée aux modes de réalisation qui viennent d'être décrits et représentés. D'autres variantes de réalisation de l'invention apparaîtront à l'homme ou la femme de l'art, ces variantes ne sortant pas du cadre de l'invention. Par exemple l'agencement des éléments résistifs R1 et R2 pour réaliser le pont diviseur de tension peut être modifié. On pourra également remplacer le transistor T par tout autre dispositif interrupteur.

**Revendications**

1. Appareil électronique destiné à être alimenté à partir d'une tension d'alimentation (Vbat) comportant :

   - un dispositif de détection de tension d'alimentation (37) pour fournir des signaux d'interruption représentatifs du franchissement de seuils de tension par la tension d'alimentation,
   - un organe de contrôle (30) muni d'au moins une entrée d'interruption (IT), lesdits signaux d'interruption étant appliqués à ladite entrée d'interruption pour générer respectivement une interruption de l'organe de contrôle et déclencher un programme d'interruption répondant auxdits signaux, appareil électronique **caractérisé en ce qu'**il comporte une mémoire (32) contenant des valeurs de consigne correspondant aux seuils de tensions, lesdites valeurs étant effaçables électriquement, et en ce que l'organe de contrôle est apte à transmettre au dispositif de détection de tension d'alimentation une valeur de consigne correspondant à un second seuil de tension lorsque qu'un signal d'interruption correspondant au franchissement d'un premier seuil de tension est fourni audit organe.

2. Appareil électronique selon la revendication 1, dans lequel le dispositif de détection de tension d'alimentation (37) est apte à fournir un premier signal d'interruption indiquant une chute de tension d'alimentation, et comprenant des moyens de sauvegarde pour sauvegarder les valeurs contenues dans la mémoire (32) à l'apparition dudit signal.

**3.** Appareil électronique selon l'une des revendications 1 à 2, dans lequel le dispositif de tension d'alimentation (37) est apte à fournir un deuxième signal d'interruption pour indiquer un niveau de tension d'alimentation.

**4.** Appareil électronique selon l'une des revendications 1 à 3, dans lequel le dispositif de tension d'alimentation (37) est apte à fournir un troisième signal d'interruption pour indiquer une surcharge.

**5.** Appareil électronique selon l'une des revendications 1 à 4, dans lequel le dispositif de détection de tension d'alimentation (37) comporte un élément résistif (R2) à résistance variable, une tension aux bornes dudit élément étant fonction de la tension d'alimentation (Vbat), les signaux d'interruption étant délivrés si la tension aux bornes de l'élément résistif franchit une valeur de référence, une valeur de résistance de l'élément résistif étant modifiée par l'organe de contrôle lorsqu'un signal d'interruption est fourni audit organe.

**6.** Appareil électronique selon la revendication 5, dans lequel la tension aux bornes de l'élément résistif (R2) est apte à commander un transistor fonctionnant en mode interrupteur de manière à fournir le signal d'interruption.

**7.** Appareil électronique selon l'une des revendications 1 à 4, dans lequel le dispositif de détection de tension d'alimentation (37) comporte un dispositif de comparaison pour comparer la valeur de la tension d'alimentation (Vbat) aux valeurs de consigne et fournir respectivement les signaux d'interruption.

**8.** Appareil électronique selon l'une des revendications 1 à 7, **caractérisé en ce que** ledit appareil est un radiotéléphone.

**Claims**

**1.** An electronic apparatus intended to be supplied with power via a supply voltage (Vbat), comprising:

- a supply voltage detection device (37) for producing interrupt signals representing the crossing of voltage thresholds by the supply voltage
- a control element (30) having at least one interrupt input (IT), said interrupt signals being applied to said interrupt input to generate an interruption of the control element and to start an interrupt program responding to said signals, which electronic device is **characterized in that** it comprises a memory (32) containing set values that correspond to the voltage thresholds, said values being electrically erasable, and **in that** the control element is suitable for transmitting to the supply voltage detection device a set value that corresponds to a second voltage threshold when an interrupt signal that corresponds to the crossing of a first voltage threshold is fed to the element.

**2.** An electronic apparatus as claimed in claim 1, in which the supply voltage detection device (37) is suitable for producing a first interrupt signal which indicates a drop in supply voltage, and comprises back-up means for backing up the values contained in the memory (32) at the occurrence of said signal.

**3.** An electronic apparatus as claimed in any one of the claims 1 to 2, in which the supply voltage detection device (37) is suitable for producing a second interrupt signal to indicate a supply voltage level.

**4.** An electronic apparatus as claimed in any one of the claims 1 to 3, in which the supply voltage detection device (37) is suitable for producing a third interrupt signal to indicate an overload.

**5.** An electronic apparatus as claimed in any one of the claims 1 to 4, in which the supply voltage detection device (37) comprises a resistor element (R2) having variable resistance, a voltage on the terminals of said element having the function of supply voltage (Vbat), the interrupt signals being delivered if the voltage on the terminals of the resistor element exceeds a reference value, a resistance value of the resistor element being modified by the control element when an interrupt signal is supplied to said element.

**6.** An electronic apparatus as claimed in claim 5, in which the voltage on the terminals of the resistor element (R2) is suitable for controlling a transistor which functions in the switch mode in order to produce the interrupt signal.

**7.** An electronic apparatus as claimed in any one of the claims 1 to 4, in which the supply voltage detection device (37) comprises a comparing device for comparing the value of the supply voltage (Vbat) to the set values and produce the interrupt signal respectively.

8. An electronic apparatus as claimed in any one of the claims 1 to 7, **characterized in that** said apparatus is a radio telephone.


**Patentansprüche**

1. Elektronisches Gerät zur Versorgung mit einer Versorgungsspannung (Vbat) mit:

   - einer Detektorvorrichtung der Versorgungsspannung (37), um Unterbrechungssignale auszugeben, die eine Überschreitung der Spannungsgrenzwerte durch die Versorgungsspannung darstellen,
   - einem Steuerorgan (30), versehen mit mindestens einem Unterbrechungseingang (IT), wobei die besagten Unterbrechungssignale dem besagten Unterbrechungseingang zugeführt werden, um respektive eine Unterbrechung des Steuerorgans zu bewirkten und ein Unterbrechungsprogramm auszulösen, das auf die besagten Signale reagiert, **dadurch gekennzeichnete**s elektronisches Gerät, dass es einen Speicher (32) aufweist, der Vorgabewerte entsprechend den Spannungsgrenzwerten enthält, wobei die besagten Werte elektrisch löschbar sind, und dadurch, dass das Steuerorgan dazu in der Lage ist, an die Detektorvorrichtung der Versorgungsspannung einen Vorgabewert entsprechend einem zweiten Spannungsgrenzwert zu übertragen, wenn ein Unterbrechungssignal entsprechend der Überschreitung eines ersten Spannungsgrenzwerts an das besagte Organ geleitet wird.

2. Elektronisches Gerät nach Anspruch 1, in dem die Detektorvorrichtung der Versorgungsspannung (37) dazu in der Lage ist, ein erstes Unterbrechungssignal auszugeben, das einen Abfall der Versorgungsspannung anzeigt, und das Speichermittel aufweist, um beim Auftreten des besagten Signals die in dem Speicher (32) enthaltenen Werte abzuspeichem.

3. Elektronisches Gerät nach einem der Ansprüche 1 bis 2, in dem die Versorgungsspannungvorrichtung (37) ist die dazu in der Lage ist, ein zweites Unterbrechungssignal auszugeben, um ein Versorgungsspannungsniveau anzuzeigen.

4. Elektronisches Gerät nach einem der Ansprüche 1 bis 3, in dem die Versorgungsspannungvorrichtung (37) dazu in der Lage ist, ein drittes Unterbrechungssignal auszugeben, um eine Überladung anzuzeigen.

5. Elektronisches Gerät nach einem der Ansprüche 1 bis 4, in dem die Detektorvorrichtung der Versorgungsspannung (37) ein resistives Element (R2) mit variablem Widerstand aufweist, wobei die Spannung an den Klemmen des besagten Elements von der Versorgungsspannung (Vbat) abhängt, die Unterbrechungssignale ausgegeben werden, wenn die Spannung an den Klemmen des resistiven Elements einen Referenzwert überschreitet und der Wert des Widerstands des resistiven Element vom Steuerorgan geändert wird, wenn ein Unterbrechungssignal an das besagte Organ geleitet wird.

6. Elektronisches Gerät nach Anspruch 5, in dem die Spannung an den Klemmen des resistiven Elements (R2) dazu in der Lage ist, einen Transistor zu steuern, der in Unterbrechungsmodus arbeitet, um das Unterbrechungssignal auszugeben.

7. Elektronisches Gerät nach einem der Ansprüche 1 bis 4, in dem die Detektorvorrichtung der Versorgungsspannung (37) eine Vergleichsvorrichtung für den Vergleich des Versorgungsspannungswerts mit (Vbat) mit den Vorgabewerten und die jeweilige Ausgabe der Unterbrechungssignale aufweist.

8. Elektronisches Gerät nach einem der Ansprüche 1 bis 7, **dadurch gekennzeichnet, dass** das besagte Gerät ein Funktelefon ist.

FIG. 1

FIG. 2

FIG. 3

Vbat

R0

37

R1

Vbat

R2

IT

CMD

30

# FIG. 4

32a

ρ5

ρ4

ρ3

ρ2

ρ1

ρ0

# FIG. 5

$\overline{CS}$

$U/\overline{D}$

$\overline{INC}$

FIG. 6A

$\overline{CS}$

$U/\overline{D}$

$\overline{INC}$

FIG. 6B

FIG. 7

FIG. 8